(19) Europäisches Patentamt
European Patent Office
Office européen des brevets

(11) **EP 3 513 134 B1**

(12) **FASCICULE DE BREVET EUROPEEN**

(45) Date de publication et mention
de la délivrance du brevet:
**12.08.2020 Bulletin 2020/33**

(21) Numéro de dépôt: **17780818.5**

(22) Date de dépôt: **15.09.2017**

(51) Int Cl.:
*F25B 1/10* (2006.01)     *F25B 6/04* (2006.01)
*F25B 40/00* (2006.01)

(86) Numéro de dépôt international:
**PCT/FR2017/052475**

(87) Numéro de publication internationale:
**WO 2018/051038 (22.03.2018 Gazette 2018/12)**

(54) **CIRCUIT DE GESTION THERMIQUE POUR VEHICULE AUTOMOBILE**

WÄRMEVERWALTUNGSSCHALTUNG FÜR KRAFTFAHRZEUG

MOTOR VEHICLE THERMAL MANAGEMENT CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.09.2016 FR 1658674**

(43) Date de publication de la demande:
**24.07.2019 Bulletin 2019/30**

(73) Titulaire: **Valeo Systemes Thermiques
78322 Le Mesnil Saint-Denis Cedex (FR)**

(72) Inventeurs:
 • **YAHIA, Mohamed
   78322 Le Mesnil Saint-Denis Cedex (FR)**
 • **HALLER, Régine
   78322 Le Mesnil Saint-Denis Cedex (FR)**
 • **HAMMI, Samy
   78322 Le Mesnil Saint-Denis Cedex (FR)**

(74) Mandataire: **Tran, Chi-Hai et al
   Valeo Systèmes Thermiques
   BG THS - Service Propriété Industrielle THS
   ZA L' Agiot, 8 rue Louis Lormand
   CS 80517 La Verrière
   78322 Le Mesnil Saint Denis Cedex (FR)**

(56) Documents cités:
**EP-A1- 1 273 468     WO-A1-2014/047401
WO-A2-03/031884     FR-A1- 3 015 012
FR-A1- 3 030 700**

EP 3 513 134 B1

## Description

L'invention se rapporte au domaine des véhicules automobiles et plus particulièrement à un circuit de gestion thermique pour véhicule automobile et son procédé de fonctionnement.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Dans le cadre d'un véhicule automobile hybride dont le moteur à combustion interne est suralimenté, il est connu d'utiliser un circuit de refroidissement dans lequel circule un fluide caloporteur afin de refroidir l'air de suralimentation, le moteur à combustion interne, le groupe motopropulseur électrique ainsi que l'électronique de puissance, par exemple les batteries. Ce circuit de refroidissement comporte alors un radiateur dimensionné en conséquence en face avant du véhicule pour dissiper la chaleur de ses éléments.

Il est également connu d'utiliser le radiateur du circuit de refroidissement afin d'évacuer la chaleur du circuit de climatisation. Pour cela, l'échangeur de chaleur jouant le rôle de condenseur n'est plus placé dans un flux d'air extérieur mais est utilisé pour transférer cette chaleur entre le circuit de climatisation et le circuit de refroidissement.

Cependant une telle architecture de circuit de gestion thermique peut ne pas être satisfaisante.

Un des buts de la présente invention est donc de remédier au moins partiellement aux inconvénients de l'art antérieur et de proposer un circuit de gestion thermique amélioré.

La présente invention concerne donc un circuit de gestion thermique pour véhicule automobile comportant une boucle de fluide réfrigérant dans laquelle circule un fluide réfrigérant, ladite boucle de fluide réfrigérant comportant dans le sens de circulation du fluide réfrigérant :

○ un premier compresseur,
○ un premier échangeur de chaleur disposé en aval du premier compresseur,
○ un deuxième compresseur,
○ un deuxième échangeur de chaleur disposé en aval du deuxième compresseur, ledit deuxième échangeur de chaleur étant destiné à être traversé par un flux d'air extérieur au véhicule automobile,
○ un premier dispositif de détente disposé en aval du deuxième échangeur de chaleur,
○ un troisième échangeur de chaleur disposé en aval du premier dispositif de détente, ledit troisième échangeur de chaleur étant destiné à être traversé par un flux d'air intérieur à destination de l'habitacle du véhicule automobile,

ladite boucle de fluide réfrigérant comportant en outre une branche de contournement reliant la sortie de fluide réfrigérant du deuxième échangeur de chaleur à l'entrée de fluide réfrigérant du premier échangeur de chaleur, ladite branche de contournement comportant un deuxième dispositif de détente contrôlé par la mesure d'une température intermédiaire du fluide réfrigérant en sortie du premier échangeur de chaleur. Le document WO2014/047401 décrit un circuit de gestion thermique selon le préambule de la revendication 1.

Selon un aspect de l'invention, le circuit de gestion thermique comporte un dispositif de redirection du fluide réfrigérant en provenance du deuxième échangeur de chaleur vers le premier dispositif de détente et/ou vers le deuxième dispositif de détente de la branche de contournement.

Selon un autre aspect de l'invention, le circuit de gestion thermique comporte une boucle de fluide caloporteur comportant au moins un refroidisseur d'air de suralimentation et que le premier échangeur de chaleur est un échangeur de chaleur bifluide relié à ladite boucle de fluide caloporteur.

Selon un autre aspect de l'invention, le premier échangeur de chaleur est un refroidisseur d'air de suralimentation.

Selon un autre aspect de l'invention, le deuxième dispositif de détente est une vanne thermostatique d'expansion dont le bulbe thermostatique est disposé en sortie du premier échangeur de chaleur.

Selon un autre aspect de l'invention, le circuit de gestion thermique comporte un échangeur de chaleur interne, ledit échangeur de chaleur interne permettant un échange de chaleur entre le fluide réfrigérant en amont du premier dispositif de détente avec le fluide réfrigérant en sortie du deuxième dispositif de détente.

La présente invention concerne également un procédé de fonctionnement d'un circuit de gestion thermique selon un premier mode de fonctionnement dans lequel le fluide réfrigérant circule successivement dans le deuxième compresseur, le deuxième échangeur de chaleur et dans lequel en sortie dudit deuxième échangeur de chaleur :

○ une portion du fluide réfrigérant passe dans le premier dispositif de détente où il subit une perte de pression, traverse le troisième échangeur de chaleur et passe par le premier compresseur,

○ une autre portion du fluide réfrigérant passe dans la branche de contournement, traverse le deuxième dispositif de détente où il subit une perte de pression,

les fluides réfrigérants en provenance du premier compresseur et de la branche de contournement se mélangeant en amont du premier échangeur de chaleur avant de le traverser et de rejoindre le deuxième compresseur.

Selon un aspect du premier mode de fonctionnement, le fluide réfrigérant en amont du premier dispositif de détente traverse l'échangeur de chaleur interne avant d'arriver au troisième échangeur de chaleur et le fluide réfrigérant en sortie du deuxième dispositif de détente traverse également l'échangeur de chaleur interne avant de ressortir de la branche de contournement.

La présente invention concerne également un procédé de fonctionnement selon un deuxième mode de fonctionnement dans lequel le fluide réfrigérant circule successivement dans le deuxième compresseur, le deuxième échangeur de chaleur et dans lequel en sortie dudit deuxième échangeur de chaleur l'intégralité du fluide réfrigérant passe dans la branche de contournement, traverse le deuxième dispositif de détente où il subit une perte de pression, le fluide réfrigérant traverse ensuite le premier échangeur de chaleur avant de rejoindre le deuxième compresseur.

Selon un aspect du procédé de fonctionnement de l'invention, la quantité de fluide réfrigérant traversant la branche de contournement est fonction de l'ouverture du deuxième dispositif de détente contrôlée par la température intermédiaire du fluide réfrigérant en sortie du premier échangeur de chaleur.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 montre une représentation schématique d'un circuit de gestion thermique selon un premier mode de réalisation,

- la figure 2 montre une représentation schématique d'un circuit de gestion thermique selon un deuxième mode de réalisation,

- la figure 3 montre une représentation schématique d'un circuit de gestion thermique selon une variante du premier mode de réalisation de la figure 1,

- la figure 4 montre une représentation schématique d'un circuit de gestion thermique selon une autre variante du premier mode de réalisation de la figure 2,

- la figure 5a montre le circuit de gestion thermique de la figure 1 selon un premier mode de fonctionnement,

- la figure 5b montre un diagramme pression/enthalpie du fluide réfrigérant au sein du circuit de gestion thermique de la figure 1 selon une première variante du premier mode de fonctionnement,

- la figure 5c montre un diagramme pression/enthalpie du fluide réfrigérant au sein du circuit de gestion thermique de la figure 1 selon une deuxième variante du premier mode de fonctionnement,

- la figure 5d montre un diagramme pression/enthalpie du fluide réfrigérant au sein du circuit de gestion thermique de la figure 1 selon une troisième variante du premier mode de fonctionnement,

- la figure 6a montre le circuit de gestion thermique de la figure 2 selon le premier mode de fonctionnement,

- la figure 6b montre un diagramme pression/enthalpie du fluide réfrigérant au sein du circuit de gestion thermique de la figure 2 selon une première variante du premier mode de fonctionnement,

- la figure 6c montre un diagramme pression/enthalpie du fluide réfrigérant au sein du circuit de gestion thermique de la figure 2 selon une deuxième variante du premier mode de fonctionnement,

- la figure 6d montre un diagramme pression/enthalpie du fluide réfrigérant au sein du circuit de gestion thermique de la figure 2 selon une troisième variante du premier mode de fonctionnement,

- la figure 7a montre le circuit de gestion thermique de la figure 1 selon un deuxième mode de fonctionnement,

- la figure 7b montre un diagramme pression/enthalpie du fluide réfrigérant au sein du circuit de gestion thermique de la figure 1 selon le deuxième mode de fonctionnement,

- la figure 8 montre le circuit de gestion thermique de la figure 2 selon le deuxième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

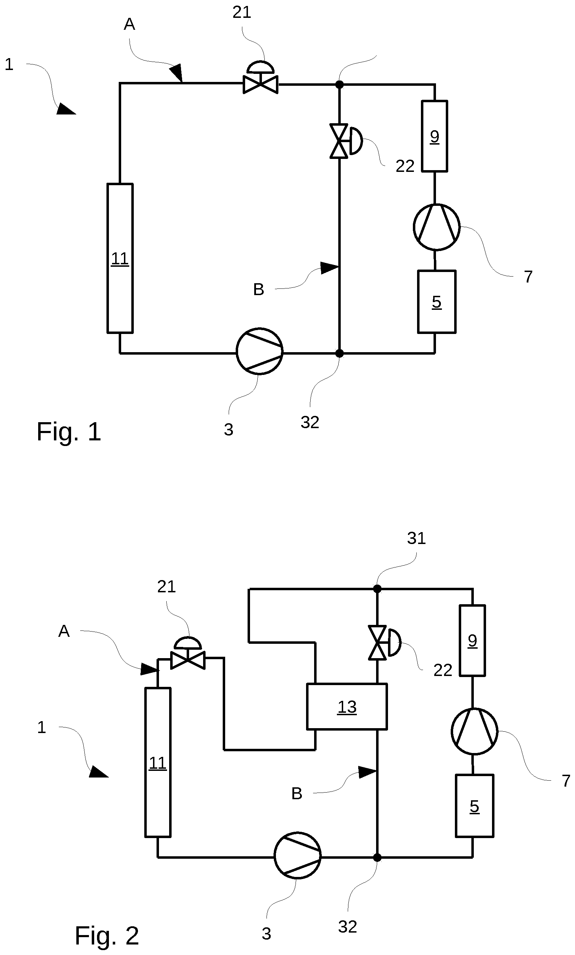

La figure 1 montre un circuit de gestion thermique 1 pour véhicule automobile comportant une boucle de fluide réfrigérant A dans laquelle circule un fluide réfrigérant, par exemple du R134a.

La boucle de fluide réfrigérant A comporte plus particulièrement dans le sens de circulation du fluide réfrigérant :

- ∘ un premier compresseur 3,

- ∘ un premier échangeur de chaleur 5 disposé en aval du premier compresseur 3,

- ∘ un deuxième compresseur 7,

- ∘ un deuxième échangeur de chaleur 9 disposé en aval du deuxième compresseur 7, ledit deuxième échangeur de chaleur 9 étant destiné à être traversé par un flux d'air extérieur au véhicule automobile,

- ∘ un premier dispositif de détente 21 disposé en aval du deuxième échangeur de chaleur 9, et

- ∘ un troisième échangeur de chaleur 11 disposé en aval du premier dispositif de détente 21, ledit troisième échangeur de chaleur 11 étant destiné à être traversé par un flux d'air intérieur à destination de l'habitacle du véhicule automobile.

Le premier dispositif de détente est contrôlé par la mesure d'une température du fluide réfrigérant en sortie du troisième échangeur de chaleur 11. Pour cela, le premier dispositif de détente 21 peut être par exemple une vanne thermostatique d'expansion dont le bulbe thermostatique est disposé en sortie du troisième échangeur de chaleur 11. Il est cependant tout à fait possible d'imaginer d'autres types de dispositif de détente par exemple une vanne d'expansion électronique reliée à un capteur de température disposé en sortie du troisième échangeur de chaleur 11.

La boucle de fluide réfrigérant A comporte en outre une branche de contournement B reliant la sortie de fluide réfrigérant du deuxième échangeur de chaleur 9 à l'entrée de fluide réfrigérant du premier échangeur de chaleur 5. Cette branche de contournement B comporte un deuxième dispositif de détente 22 contrôlé par la mesure d'une température, appelée température intermédiaire, du fluide réfrigérant en sortie du premier échangeur de chaleur 5. Pour cela, le deuxième dispositif de détente 22 peut être par exemple une vanne thermostatique d'expansion dont le bulbe thermostatique est disposé en sortie du premier échangeur de chaleur 5. Il est cependant tout à fait possible d'imaginer d'autres types de dispositif de détente par exemple une vanne d'expansion électronique reliée à un capteur de température disposé en sortie du premier échangeur de chaleur 5.

La branche de contournement B relie plus spécifiquement un premier point de jonction 31 et un deuxième point de jonction 32. Le premier point de jonction 31 est disposé, dans le sens de circulation du fluide réfrigérant, en aval du deuxième échangeur de chaleur 9, entre ledit deuxième échangeur de chaleur 9 et le premier dispositif de détente 21. Le deuxième point de jonction 32 est quant à lui disposé, dans le sens de circulation du fluide réfrigérant, en aval du premier compresseur 3, entre ledit premier compresseur 3 et le premier échangeur de chaleur 5.

Selon une variante illustrée à la figure 2, la boucle de fluide réfrigérant A peut notamment comporter un échangeur de chaleur interne 13 (connu également sous l'acronyme IHX pour « internai heat exchanger » en anglais) qui permet un échange de chaleur entre le fluide réfrigérant en sortie du deuxième échangeur de chaleur 9 avec le fluide réfrigérant en sortie du deuxième dispositif de détente 22. Plus précisément, l'IHX 13 comporte une première entrée de fluide réfrigérant disposée en aval du deuxième dispositif de détente 22. Le fluide réfrigérant entrant dans l'IHX 13 par cette première entrée de fluide réfrigérant ressort dans la branche de contournement B en amont du deuxième point de jonction 32. L'IHX 13 comporte également une deuxième entrée de fluide réfrigérant disposée en aval du premier point de jonction 31, entre ledit point de jonction 31 et le premier dispositif de détente 21. Le fluide réfrigérant entrant dans l'IHX 13 par cette deuxième entrée de fluide réfrigérant ressort en amont du premier dispositif de détente 21. Cet IHX 13 permet notamment une amélioration du coefficient de performance du circuit de gestion thermique 1.

Le circuit de gestion thermique 1 comporte un dispositif de redirection du fluide réfrigérant en provenance du deuxième échangeur de chaleur 9 vers le premier dispositif de détente 21 et/ou vers le deuxième dispositif de détente 22 de la branche de contournement B.

Ce dispositif de redirection du fluide réfrigérant peut être de réalisé par divers moyens pouvant être pilotés par une unité de commande électronique embarquée dans le véhicule automobile.

Par exemple un moyen peut être une vanne d'arrêt (non représentée) disposée en aval du premier point de jonction 31, entre ledit premier point de jonction 31 et le premier dispositif de détente 21, ou alors disposée en amont du deuxième point de jonction 32, entre le premier dispositif de détente 21 et ledit deuxième point de jonction 32.

Un autre moyen peut être que le premier dispositif de détente 21 comporte une fonction d'arrêt et donc qu'il soit apte à bloquer le flux de fluide réfrigérant.

Un moyen peut également être un arrêt du premier compresseur 3 qui empêche ainsi la circulation du fluide réfrigérant entre les premier 31 et deuxième 32 points de jonction dans la branche du circuit de gestion thermique comporte le premier dispositif de détente 21.

Que ce soit pour le circuit de gestion thermique 1 de la figure 1 ou de la figure 2, le deuxième échangeur de chaleur 9 joue principalement le rôle d'un condenseur et le troisième échangeur de chaleur 11 joue principalement le rôle d'un évaporateur.

Le premier échangeur de chaleur 5 peut être quant à lui un refroidisseur d'air de suralimentation qui est traversé par l'air de suralimentation en provenance d'un turbocompresseur et à destination du moteur thermique.

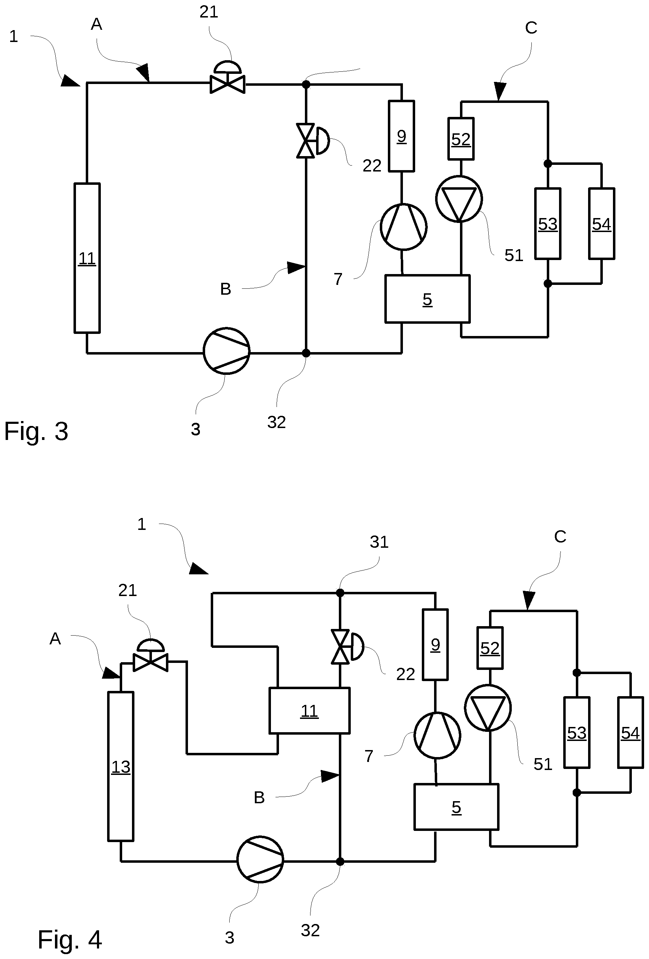

Selon une variante illustrée aux figures 3 et 4, le premier échangeur de chaleur 5 peut être un échangeur de chaleur bifluide connecté simultanément à la boucle de fluide réfrigérant A et à une boucle de fluide caloporteur C à l'intérieur de laquelle circule un fluide caloporteur, par exemple de l'eau glycolée.

Comme le montrent les figures 3 et 4, la boucle de fluide caloporteur C peut notamment comporter une pompe 51 et un quatrième échangeur de chaleur 52 qui peut être un refroidisseur d'air de suralimentation. La boucle de fluide caloporteur C peut également comporter un cinquième 53 et un sixième 54 échangeurs de chaleur qui peuvent être respectivement disposés au contact du groupe motopropulseur et de l'électronique de puissance d'un véhicule automobile hybride. Les cinquième 53 et sixième 54 échangeurs de chaleur peuvent être en parallèle l'un de l'autre, c'est à dire qu'ils partagent le fluide caloporteur en provenance d'une même source.

Dans le cas illustré aux figures 3 et 4, les cinquième 53 et sixième 54 échangeurs de chaleur sont disposés, dans le sens de circulation du fluide caloporteur, en aval du premier échangeur de chaleur 5 et ils sont tous deux connectés à la sortie de fluide réfrigérant dudit premier échangeur de chaleur 5. Le quatrième échangeur de chaleur 52 est quant à lui disposé, dans le sens de circulation du fluide caloporteur, en amont du premier échangeur de chaleur 5 et en aval des cinquième 53 et sixième 54 échangeurs de chaleur. Cette disposition s'explique du fait que le quatrième échangeur de chaleur 52 est l'échangeur de chaleur de la boucle de fluide caloporteur C qui a le plus de chaleur à dissiper par rapport aux cinquième 53 et sixième 54 échangeurs de chaleur.

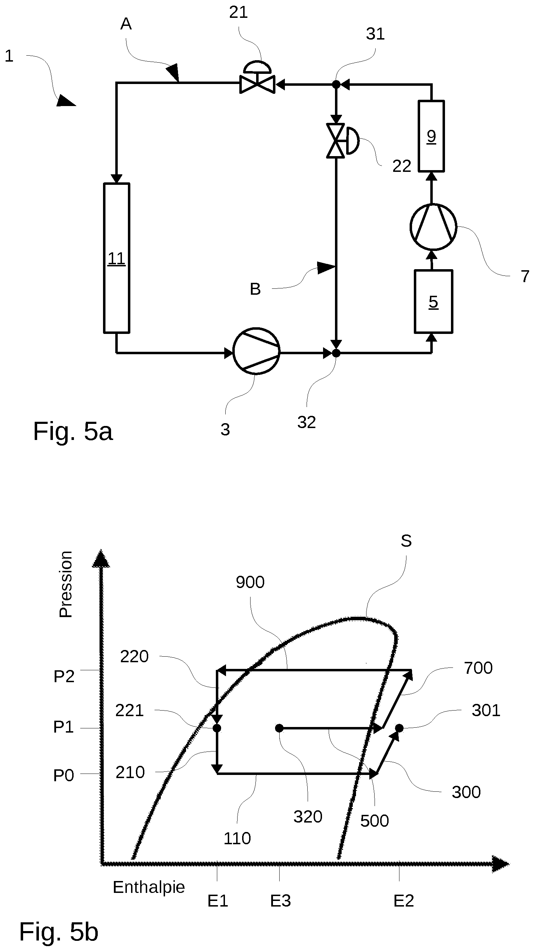

La présente invention concerne également un procédé de fonctionnement du circuit de gestion thermique 1 selon différents modes de fonctionnement et variantes illustrés aux figures 5a à 8. Sur les figures 5a, 6a, 7a, et 8, les éléments dans lesquels le fluide réfrigérant circulent sont représentés en trait plein et les éléments dans lesquels le fluide réfrigérant ne circule pas sont représentés en traits pointillés. Le sens de circulation du fluide réfrigérant est représenté par des flèches. Sur les figures 5b à 5c, 6b à 6c et 7b, la courbe S correspond à la courbe de saturation du fluide réfrigérant, en l'occurrence du R134a.

La figure 5a montre un premier mode de fonctionnement dans lequel le fluide réfrigérant circule successivement dans le deuxième compresseur 7, le deuxième échangeur de chaleur 9 et dans lequel en sortie dudit deuxième échangeur de chaleur 9 :

◦ une portion du fluide réfrigérant passe dans le premier dispositif de détente 21 où il subit une perte de pression isenthalpique, traverse le troisième échangeur de chaleur 11 et passe par le premier compresseur 3,

◦ une autre portion du fluide réfrigérant passe dans la branche de contournement B, traverse le deuxième dispositif de détente 22 où il subit une perte de pression isenthalpique.

Les fluides réfrigérants en provenance du premier compresseur 3 et de la branche de contournement B se mélangent en amont du premier échangeur de chaleur 5 avant de le traverser et de rejoindre le deuxième compresseur 7.

Dans ce premier mode de fonctionnement, le dispositif de redirection du fluide réfrigérant en provenance du deuxième échangeur de chaleur 9 permet une circulation du fluide réfrigérant dans le premier dispositif de détente 21 et dans le deuxième dispositif de détente 22 de la branche de contournement B.

Comme dit plus haut, le deuxième dispositif de détente 22 est contrôlé par la température intermédiaire en sortie du premier échangeur de chaleur. Ainsi, selon les besoins en refroidissement au niveau du premier échangeur de chaleur 5, c'est à dire en fonction de la température intermédiaire du fluide réfrigérant en sortie du premier échangeur de chaleur 5, la quantité de fluide réfrigérant traversant la branche de contournement B peut varier en fonction de l'ouverture du deuxième dispositif de détente 22.

La figure 5b montre un diagramme pression / enthalpie d'une première variante du premier mode de fonctionnement où le circuit de gestion thermique 1 fonctionne en tant que circuit de climatisation, c'est à dire qu'il refroidit un flux d'air destiné à l'habitacle via le troisième échangeur de chaleur 11 et permet également de dissiper une grande quantité de chaleur issue du premier échangeur de chaleur 5. Cela peut par exemple être le cas lorsque le moteur à combustion interne est fortement sollicité et que l'utilisateur a allumé la fonction climatisation du véhicule automobile.

Dans cette première variante de la figure 5b, le fluide réfrigérant à l'état gazeux en sortie du premier échangeur de chaleur 5 traverse le deuxième compresseur 7 et passe d'une première pression P1 à une deuxième pression P2 en se comprimant, comme l'illustre la flèche 700. Le fluide réfrigérant traverse ensuite le deuxième échangeur de chaleur 9 dans lequel il dissipe de la chaleur et perd de l'enthalpie en la transférant à un flux d'air extérieur au véhicule automobile. Du fait de cette perte d'enthalpie, le fluide réfrigérant traverse une première fois sa courbe de saturation S pour passer dans un état de mélange gaz plus liquide et une seconde fois pour passer dans un état liquide.

Au niveau du premier point de jonction 31 :

- une portion du fluide réfrigérant passe dans la branche de contournement B et traverse le deuxième dispositif de détente 22 où il subit une perte de pression isenthalpique, comme illustré par la flèche 220, pour passer de la deuxième pression P2 à la première pression P1 montrée par le point 221. A ce point 221, c'est à dire en sortie du deuxième détendeur 22, le fluide réfrigérant est à une enthalpie E1. Du fait de cette perte de pression, le fluide réfrigérant coupe sa courbe de saturation S et passe de l'état liquide à un mélange gaz plus liquide,

- une autre portion du fluide réfrigérant traverse le premier dispositif de détente 21 où il subit une perte de pression isenthalpique, comme illustré par la flèche 210, pour passer de la deuxième pression P2 à une troisième pression P0. Cette troisième pression P0 est inférieure à la première pression P1. Du fait de cette perte de pression, le fluide réfrigérant coupe sa courbe de saturation S et passe de l'état liquide à un mélange gaz plus liquide. Cette autre portion de fluide réfrigérant traverse ensuite le troisième échangeur de chaleur 11 ou il gagne de l'enthalpie en refroidissant un flux d'air destiné à l'habitacle du véhicule automobile. Cette autre portion de fluide réfrigérant passe ensuite par le premier compresseur 3 où il passe de la troisième pression P0 à la première pression P1 montrée par le point 301. A ce point 301, c'est à dire en sortie du premier compresseur 3, le fluide réfrigérant est à l'état gazeux et a une enthalpie E2.

Au niveau du deuxième point de jonction 32, les deux portions de fluide réfrigérant se mélangent et le fluide réfrigérant atteint une enthalpie E3 illustrée par le point 320.

L'enthalpie E3 peut être calculée selon la formule suivante :

$$E3 = (X1*E1) + (X2*E2)$$

où X1 est la proportion de fluide réfrigérant passant par la branche de contournement B et le deuxième dispositif de détente 22 et où X2 est la proportion de fluide réfrigérant passant par le premier dispositif de détente 21, le troisième échangeur de chaleur 11 et le premier compresseur 3. La somme de X1 et X2 étant égale à 100 %.

Comme décrit plus haut, dans la première variante illustrée à la figure 5b, la température intermédiaire du fluide réfrigérant en sortie du premier échangeur de chaleur 5 est élevée. Cette température intermédiaire influe sur le deuxième dispositif de détente 22 ce qui permet le passage d'une grande proportion de fluide réfrigérant dans la branche de contournement B. Dans le cas illustré à la figure 5b, la proportion de fluide réfrigérant passant dans la branche de contournement B est supérieure à 50 %, voir même supérieure à 70 %.

De ce fait, l'enthalpie E3 du fluide réfrigérant au point de jonction 32 sera proche de l'enthalpie E1 et donc relativement faible en entrée du premier échangeur de chaleur 5. Comme l'enthalpie E3 du fluide réfrigérant en entrée du premier échangeur de chaleur 5 est relativement faible, ledit fluide réfrigérant en traversant le premier échangeur de chaleur 5 peut absorber une grande quantité d'enthalpie et refroidir fortement l'air de suralimentation ou le fluide caloporteur d'une boucle de fluide caloporteur C, comme le montre la flèche 500. Le fluide réfrigérant en gagnant de l'enthalpie coupe de nouveau sa courbe de saturation S et passe d'un état gaz plus liquide à un état gazeux.

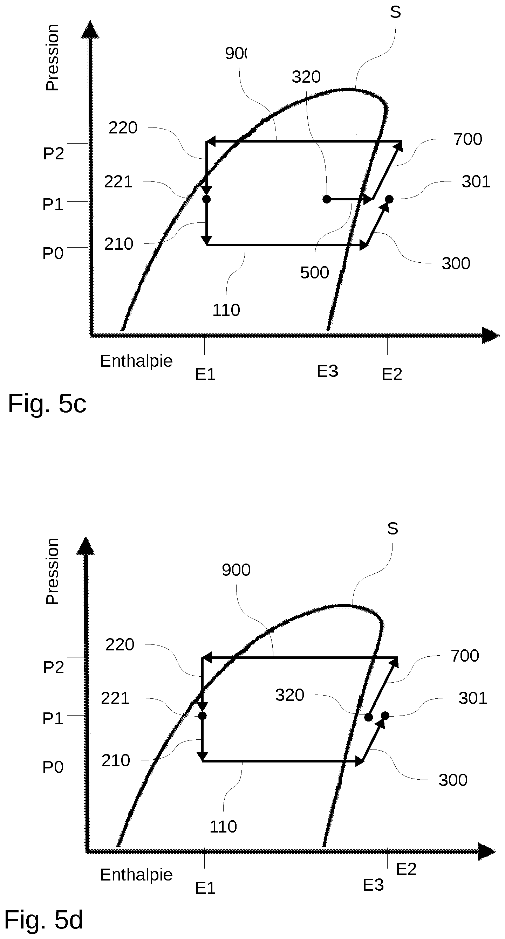

Dans une deuxième variante du premier mode de fonctionnement illustrée à la figure 5c, le circuit de gestion thermique 1 fonctionne également en tant que circuit de climatisation et permet de dissiper une quantité modérée de chaleur issue du premier échangeur de chaleur 5. Cela peut par exemple être le cas lorsque le moteur à combustion interne est faiblement sollicité et que l'utilisateur a allumé la fonction climatisation du véhicule automobile.

Dans cette deuxième variante, la température intermédiaire en sortie du premier échangeur de chaleur 5 est relativement modérée (du moins par rapport à celle de la première variante du premier mode de fonctionnement). Comme précédemment, cette température intermédiaire influe sur le deuxième dispositif de détente 22 ce qui permet le passage d'une proportion modérée de fluide réfrigérant dans la branche de contournement B. Dans le cas illustré à la figure 5c, la proportion de fluide réfrigérant passant dans la branche de contournement B est de l'ordre de 20 à 30%.

De ce fait, l'enthalpie E3 du fluide réfrigérant au point de jonction 32 sera proche de l'enthalpie E2 et donc relativement modérée en entrée du premier échangeur de chaleur 5. Comme l'enthalpie E3 du fluide réfrigérant en entrée du premier échangeur de chaleur 5 est relativement modérée, ledit fluide réfrigérant en traversant le premier échangeur de chaleur 5 peut absorber seulement une quantité modérée d'enthalpie et refroidir modérément l'air de suralimentation ou le fluide caloporteur d'une boucle de fluide caloporteur C, comme le montre la flèche 500. Le fluide réfrigérant en gagnant de l'enthalpie coupe de nouveau sa courbe de saturation S et passe d'un état gaz plus liquide à un état gazeux.

Dans une troisième variante du premier mode de fonctionnement illustrée à la figure 5d, le circuit de gestion thermique 1 fonctionne également en tant que circuit de climatisation et ne permet pas de dissiper de la chaleur issue du premier échangeur de chaleur 5. Cela peut par exemple être le cas lorsque le moteur à combustion interne n'est pas ou peu sollicité, et que l'utilisateur a allumé la fonction climatisation du véhicule automobile, par exemple à l'arrêt du véhicule.

Dans cette troisième variante, la température intermédiaire en sortie du premier échangeur de chaleur 5 est relativement faible (du moins par rapport à celle des première et deuxième variantes du premier mode de fonctionnement). Comme précédemment, cette température intermédiaire influe sur le deuxième dispositif de détente 22 ce qui permet le passage d'une faible proportion de fluide réfrigérant dans la branche de contournement B. Dans le cas illustré à la figure 5d, la proportion de fluide réfrigérant passant dans la branche de contournement B est inférieure à 10%, voir même inférieure à 5 %.

De ce fait, l'enthalpie E3 du fluide réfrigérant au point de jonction 32 sera très proche de l'enthalpie E2 et donc relativement haute en entrée du premier échangeur de chaleur 5. Comme l'enthalpie E3 du fluide réfrigérant en entrée du premier échangeur de chaleur 5 est relativement haute, ledit fluide réfrigérant en traversant le premier échangeur de chaleur 5 ne peut pas absorber d'enthalpie et refroidir l'air de suralimentation ou le fluide caloporteur d'une boucle de fluide caloporteur C. Cela est montré par l'absence de flèche 500 sur la figure 5d.

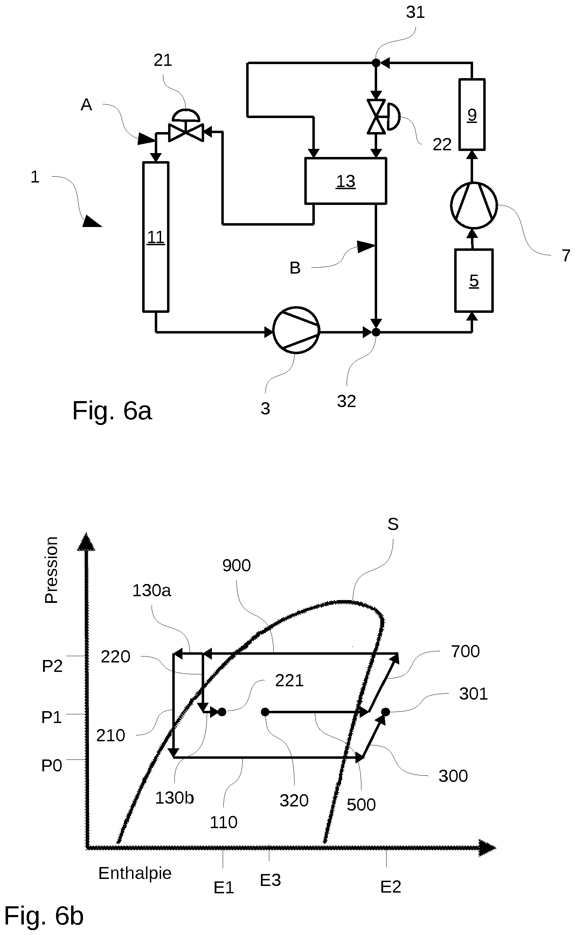

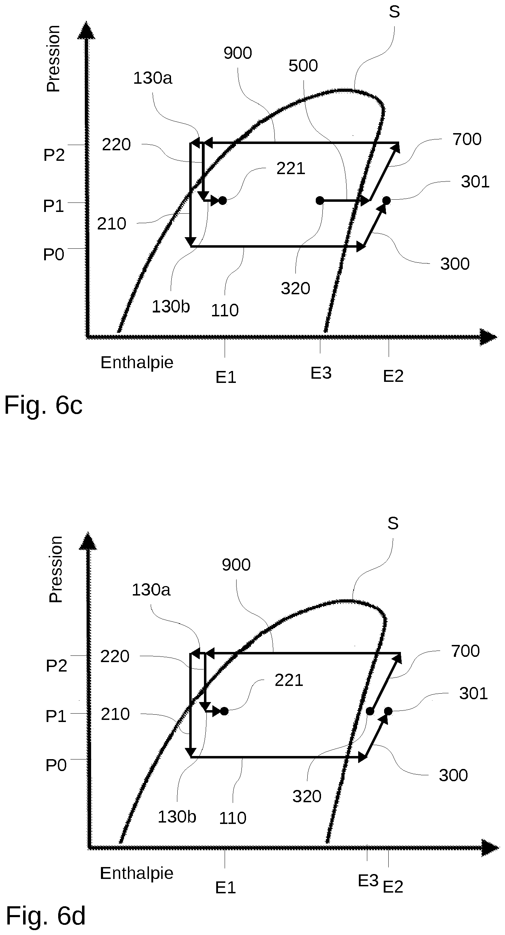

Comme le montre la figure 6a, le premier mode de fonctionnement peut également fonctionner lorsque le circuit de gestion thermique 1 comporte un IHX 13. La circulation du fluide réfrigérant est identique à celle illustrée à la figure 5a à la différence qu'en sortie du premier point de jonction 31, le fluide réfrigérant passe dans l'IHX 13 avant de rejoindre le premier dispositif de détente 21 et qu'en sortie du deuxième dispositif de détente 22, le fluide réfrigérant traversant la branche de contournement B passe dans l'IHX 13 avant de rejoindre le deuxième point de jonction 32.

L'influence de l'IHX 13 est visible sur les diagrammes pression /enthalpie des figures 6b à 6d, correspondant respectivement aux première, deuxième et troisième variantes du premier mode de fonctionnement. L'IHX 13 permet une diminution de l'enthalpie du fluide réfrigérant, illustrée par la flèche 130a, avant son entrée dans le premier dispositif de détente 21 en transférant une partie de cette enthalpie au fluide réfrigérant en aval du deuxième dispositif de détente 22. Cette augmentation d'enthalpie est illustré par la flèche 130b. Le point 221 sera alors décalé vers la droite et donc son enthalpie E1 sera plus grande que celle sans IHX 13. La variation d'enthalpie illustrée par la flèche 900 est alors plus grande que celle illustrée aux figures 5b à 5c où il n'y a pas d'IHX 13. L'IHX 13 permet une augmentation de la puissance de refroidissement et améliore le coefficient de performance (ou COP pour « coefficient of performance ») en diminuant l'enthalpie du fluide réfrigérant avant son entrée dans le premier dispositif de détente 21 et en la transférant au fluide réfrigérant de la branche de contournement B.

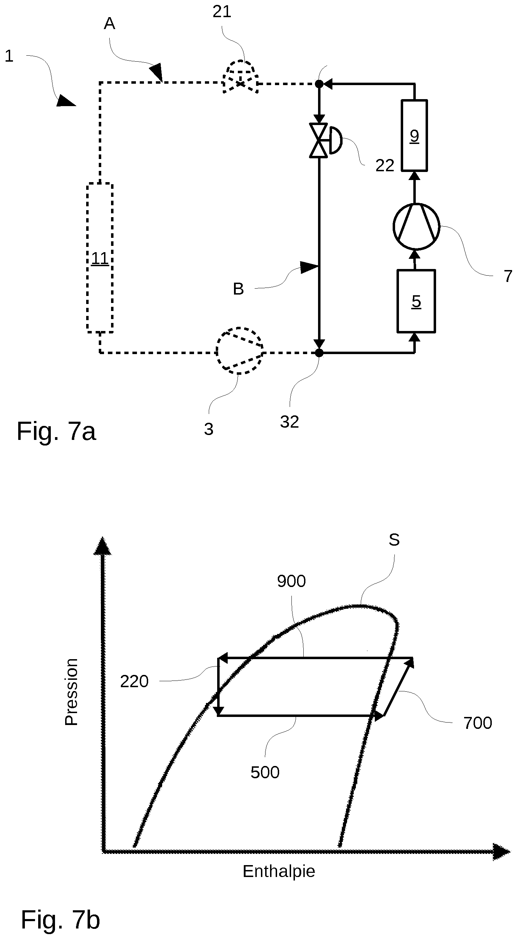

La figure 7a montre un deuxième mode de fonctionnement du circuit de gestion thermique 1. Dans ce deuxième mode de fonctionnement, le fluide réfrigérant circule successivement dans le deuxième compresseur 7 et dans le deuxième échangeur de chaleur 9. En sortie du deuxième échangeur de chaleur 9 l'intégralité du fluide réfrigérant passe dans la branche de contournement B et traverse le deuxième dispositif de détente 22 où il subit une perte de pression isenthalpique. Le fluide réfrigérant traverse ensuite le premier échangeur de chaleur 5 avant de rejoindre le deuxième compresseur 7.

Dans ce deuxième mode de fonctionnement, le dispositif de redirection du fluide réfrigérant en provenance du deuxième échangeur de chaleur 9 permet une circulation du fluide réfrigérant uniquement dans la branche de contournement B.

Comme dit plus haut, le deuxième dispositif de détente 22 est contrôlé par la température intermédiaire en sortie du premier échangeur de chaleur 5. Ainsi, selon les besoins en refroidissement au niveau du premier échangeur de chaleur 5, c'est à dire en fonction de la température intermédiaire du fluide réfrigérant en sortie du premier échangeur de chaleur 5, la quantité de fluide réfrigérant traversant la branche de contournement B peut varier en fonction de l'ouverture du deuxième dispositif de détente 22. Cela permet de contrôler le refroidissement de l'air de suralimentation ou du fluide caloporteur de la boucle de fluide caloporteur C

La figure 7b montre un diagramme pression / enthalpie du deuxième mode de fonctionnement où le circuit de gestion thermique 1 fonctionne uniquement en tant que circuit de refroidissement afin de dissiper de la chaleur issue du premier échangeur de chaleur 5. Cela peut par exemple être le cas lorsque le moteur à combustion interne est sollicité et que l'utilisateur a éteint la fonction climatisation du véhicule automobile.

Dans ce deuxième mode de fonctionnement, le fluide réfrigérant à l'état gazeux en sortie du premier échangeur de chaleur 5 traverse le deuxième compresseur 7 et passe d'une première pression P1 à une deuxième pression P2 comme l'illustre la flèche 700. Le fluide réfrigérant traverse ensuite le deuxième échangeur de chaleur 9 dans lequel il dissipe de la chaleur et perd de l'enthalpie en la transférant à un flux d'air extérieur au véhicule automobile. Du fait de cette perte d'enthalpie, le fluide réfrigérant traverse une première fois sa courbe de saturation S pour passer dans un état de mélange gaz plus liquide et une seconde fois pour passez dans un état liquide.

Au niveau du premier point de jonction 31, la totalité du fluide réfrigérant passe dans la branche de contournement B et traverse le deuxième dispositif de détente 22 où il subit une perte de pression isenthalpique et repasse à le première pression P1, comme illustré par la flèche 220. Du fait de cette perte de pression, le fluide réfrigérant coupe sa courbe de saturation S et passe de l'état liquide à un mélange gaz plus liquide. Le fluide réfrigérant traverse ensuite le premier échangeur de chaleur 5 et absorbe de l'enthalpie en refroidissant l'air de suralimentation ou le fluide caloporteur d'une boucle de fluide caloporteur C, comme illustré par la flèche 500. Le fluide réfrigérant en gagnant de l'enthalpie coupe de nouveau sa courbe de saturation S et passe d'un état gaz plus liquide à un état gazeux.

Ce deuxième mode de fonctionnement est utile afin de consacrer totalement le circuit de gestion thermique 1 au refroidissement de l'air de suralimentation ou du fluide caloporteur de la boucle de fluide caloporteur C.

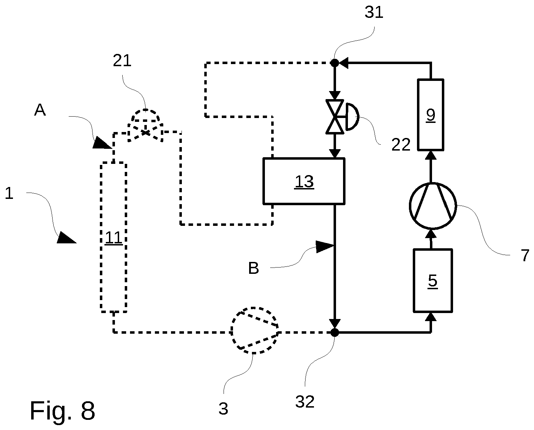

Ce deuxième mode de fonctionnement peut également fonctionner lorsque le circuit de gestion thermique 1 comporte un IHX 13 comme le montre la figure 8. Cependant, l'IHX 13 n'as pas d'influence car il est traversé par un seul flux de fluide réfrigérant.

Ainsi, on voit bien que le circuit de gestion thermique 1 selon l'invention, de part son architecture, permet selon les besoins un refroidissement de l'habitacle et/ou de l'air de suralimentation via un refroidissement direct ou via une boucle de fluide caloporteur. De plus, de part l'utilisation d'un premier compresseur 3 et d'un deuxième compresseur 7, il est possible d'instaurer deux étages de pression. Un premier étage de pression P1 utilisé pour réaliser le refroidissement de l'air de suralimentation ou d'un fluide caloporteur au niveau du premier échangeur de chaleur 5 et un deuxième étage de pression P0 utilisé pour refroidir l'air à destination de l'habitacle au niveau du troisième échangeur de chaleur 11. La chaleur absorbée au niveau du troisième échangeur de chaleur 11 et/ou du premier échangeur de chaleur 5 est quant à elle relâchée dans un flux d'air extérieur au véhicule automobile au niveau du seul deuxième échangeur de chaleur 9.

**Revendications**

1. Circuit de gestion thermique (1) pour véhicule automobile comportant une boucle de fluide réfrigérant (A) dans laquelle circule un fluide réfrigérant, ladite boucle de fluide réfrigérant (A) comportant dans le sens de circulation du fluide réfrigérant :

   ∘ un premier compresseur (3),
   ∘ un premier échangeur de chaleur (5) disposé en aval du premier compresseur (3),
   ∘ un deuxième compresseur (7),
   ∘ un deuxième échangeur de chaleur (9) disposé en aval du deuxième compresseur (7), ledit deuxième échangeur de chaleur (9) étant destiné à être traversé par un flux d'air extérieur au véhicule automobile,
   ∘ un premier dispositif de détente (21) disposé en aval du deuxième échangeur de chaleur (9),
   ∘ un troisième échangeur de chaleur (11) disposé en aval du premier dispositif de détente (21), ledit troisième échangeur de chaleur (11) étant destiné à être traversé par un flux d'air intérieur à destination de l'habitacle du véhicule automobile, **caractérisé en ce que** ladite boucle de fluide réfrigérant (A) comporte en outre une branche de contournement (B) reliant la sortie de fluide réfrigérant du deuxième échangeur de chaleur (9) à l'entrée de fluide réfrigérant du premier échangeur de chaleur (5), ladite branche de contournement (B) comportant un deuxième dispositif de détente (22) contrôlé par la mesure d'une température intermédiaire du fluide réfrigérant en sortie du premier échangeur de chaleur (5).

2. Circuit de gestion thermique (1) selon la revendication précédente, **caractérisé en ce qu'**il comporte un dispositif de redirection du fluide réfrigérant en provenance du deuxième échangeur de chaleur (9) vers le premier dispositif de détente (21) et/ou vers le deuxième dispositif de détente (22) de la branche de contournement (B).

3. Circuit de gestion thermique (1) selon l'une des revendications précédentes, **caractérisé en ce qu'**il comporte une boucle de fluide caloporteur (C) comportant au moins un refroidisseur d'air de suralimentation et que le premier échangeur de chaleur (5) est un échangeur de chaleur bifluide relié à ladite boucle de fluide caloporteur (C).

4. Circuit de gestion thermique (1) selon l'une des revendications 1 à 3, **caractérisé en ce que** le premier échangeur de chaleur (5) est un refroidisseur d'air de suralimentation.

5. Circuit de gestion thermique réversible indirect (1) selon l'une des revendications précédentes, **caractérisé en ce que** le deuxième dispositif de détente (7) est une vanne thermostatique d'expansion dont le bulbe thermostatique est disposé en sortie du premier échangeur de chaleur (5).

6. Circuit de gestion thermique (1) selon l'une des revendications précédentes, **caractérisé en ce qu'**il comporte un échangeur de chaleur interne (13), ledit échangeur de chaleur interne (13) permettant un échange de chaleur entre le fluide réfrigérant en amont du premier dispositif de détente (21) avec le fluide réfrigérant en sortie du deuxième dispositif de détente (22).

7. Procédé de fonctionnement d'un circuit de gestion thermique (1) selon l'une des revendications 1 à 6, selon un premier mode de fonctionnement dans lequel le fluide réfrigérant circule successivement dans le deuxième compresseur (7), le deuxième échangeur de chaleur (9) et dans lequel en sortie dudit deuxième échangeur de chaleur (9) :

  ∘ une portion du fluide réfrigérant passe dans le premier dispositif de détente (21) où il subit une perte de pression, traverse le troisième échangeur de chaleur (11) et passe par le premier compresseur (3),
  ∘ une autre portion du fluide réfrigérant passe dans la branche de contournement (B), traverse le deuxième dispositif de détente (22) où il subit une perte de pression,

les fluides réfrigérants en provenance du premier compresseur (3) et de la branche de contournement (B) se mélangeant en amont du premier échangeur de chaleur (5) avant de le traverser et de rejoindre le deuxième compresseur (7).

8. Procédé de fonctionnement selon la revendication précédente et dans lequel le circuit de gestion thermique est selon la revendication 6, le fluide réfrigérant en amont du premier dispositif de détente (21) traversant l'échangeur de chaleur interne (13) avant d'arriver au troisième échangeur de chaleur (11) et le fluide réfrigérant en sortie du deuxième dispositif de détente (22) traversant également l'échangeur de chaleur interne (13) avant de ressortir de la branche de contournement (B).

9. Procédé de fonctionnement d'un circuit de gestion thermique (1) selon l'une des revendications 1 à 6, selon un deuxième mode de fonctionnement dans lequel le fluide réfrigérant circule successivement dans le deuxième compresseur (7), le deuxième échangeur de chaleur (9) et dans lequel en sortie dudit deuxième échangeur de chaleur (9) l'intégralité du fluide réfrigérant passe dans la branche de contournement (B), traverse le deuxième dispositif de détente (22) où il subit une perte de pression, le fluide réfrigérant traverse ensuite le premier échangeur de chaleur (5) avant de rejoindre le deuxième compresseur (7).

10. Procédé de fonctionnement selon l'une des revendications 7 à 9 **caractérisé en ce que** la quantité de fluide réfrigérant traversant la branche de contournement est fonction de l'ouverture du deuxième dispositif de détente (22) contrôlée par la température intermédiaire du fluide réfrigérant en sortie du premier échangeur de chaleur (5).

**Patentansprüche**

1. Wärmemanagementkreislauf (1) für ein Kraftfahrzeug, umfassend eine Kühlfluidschleife (A), in der ein Kühlfluid zirkuliert, wobei die Kühlfluidschleife (A) in der Zirkulationsrichtung des Kühlfluids Folgendes aufweist:

  - einen ersten Verdichter (3),
  - einen ersten Wärmetauscher (5), der stromabwärts des ersten Verdichters (3) angeordnet ist,
  - einen zweiten Verdichter (7),
  - einen zweiten Wärmetauscher (9), der stromabwärts des zweiten Verdichters (7) angeordnet ist, wobei der zweite Wärmetauscher (9) dazu vorgesehen ist, von einem Luftstrom von außerhalb des Kraftfahrzeugs durchströmt zu werden,
  - eine erste Expansionsvorrichtung (21), die stromabwärts des zweiten Wärmetauschers (9) angeordnet ist,
  - einen dritten Wärmetauscher (11), der stromabwärts der ersten Expansionsvorrichtung (21) angeordnet ist, wobei der dritte Wärmetauscher (11) dazu vorgesehen ist, von einem Innenluftstrom in Richtung des Fahrgastraums des Kraftfahrzeugs durchströmt zu werden,

**dadurch gekennzeichnet, dass** die Kühlfluidschleife (A) ferner einen Bypass-Zweig (B) aufweist, der den Kühlfluidausgang des zweiten Wärmetauschers (9) mit dem Kühlfluideingang des erste Wärmetauschers (5) verbindet, wobei der Bypass-Zweig (B) eine zweite Expansionsvorrichtung (22) aufweist, die durch die Messung einer Zwischentemperatur des Kühlfluids am Ausgang des ersten Wärmetauschers (5) gesteuert wird.

2. Wärmemanagementkreislauf (1) nach dem vorangehenden Anspruch, **dadurch gekennzeichnet, dass** er eine Vorrichtung zur Umleitung des vom zweiten Wärmetauscher (9) kommenden Kühlfluids zur ersten Expansionsvorrichtung (21) und/oder zur zweiten Expansionsvorrichtung (22) des Bypass-Zweigs (B) aufweist.

3. Wärmemanagementkreislauf (1) nach einem der vorangehenden Ansprüche, **dadurch gekennzeichnet, dass** er eine Wärmeübertragungsfluidschleife (C) aufweist, die zumindest einen Ladeluftkühler aufweist, und dass der erste Wärmetauscher (5) ein Doppelfluidwärmetauscher ist, der mit der Wärmeübertragungsfluidschleife (C) verbunden ist.

4. Wärmemanagementkreislauf (1) nach einem der Ansprüche 1 bis 3, **dadurch gekennzeichnet, dass** der erste Wärmetauscher (5) ein Ladeluftkühler ist.

5. Indirekt reversibler Wärmemanagementkreislauf (1) nach einem der vorangehenden Ansprüche, **dadurch gekennzeichnet, dass** die zweite Expansionsvorrichtung (7) ein thermostatisches Expansionsventil ist, dessen Thermostatfühler am Ausgang des ersten Wärmetauschers (5) angeordnet ist.

6. Wärmemanagementkreislauf (1) nach einem der vorangehenden Ansprüche, **dadurch gekennzeichnet, dass** er einen inneren Wärmetauscher (13) aufweist, wobei der innere Wärmetauscher (13) einen Wärmeaustausch zwischen dem Kühlfluid stromaufwärts der ersten Expansionsvorrichtung (21) mit dem Kühlfluid am Ausgang der zweiten Expansionsvorrichtung (22) ermöglicht.

7. Verfahren zum Betreiben eines Wärmemanagementkreislaufs (1) nach einem der Ansprüche 1 bis 6 nach einer ersten Betriebsart, in der das Kühlfluid nacheinander im zweiten Verdichter (7) und im zweiten Wärmetauscher (9) zirkuliert und bei der am Ausgang des zweiten Wärmetauschers (9):

   - ein Teil des Kühlfluids in die erste Expansionsvorrichtung (21) gelangt, wo es einen Druckverlust erfährt, den dritten Wärmetauscher (11) durchströmt und durch den ersten Verdichter (3) gelangt,
   - ein weiterer Teil des Kühlfluids in den Bypass-Zweig (B) gelangt und die zweite Expansionsvorrichtung (22) durchströmt, wo es einen Druckverlust erfährt,

   wobei sich die Kühlfluide aus dem ersten Verdichter (3) und dem Bypass-Zweig (B) stromaufwärts des ersten Wärmetauschers (5) mischen, bevor sie diesen durchqueren und zum zweiten Verdichter (7) gelangen.

8. Betriebsverfahren nach dem vorangehenden Anspruch und bei dem der Wärmemanagementkreislauf nach Anspruch 6 ist, wobei das Kühlfluid stromaufwärts der ersten Expansionsvorrichtung (21) den inneren Wärmetauscher (13) durchströmt, bevor es den dritten Wärmetauscher (11) erreicht, und das Kühlfluid am Ausgang der zweiten Expansionsvorrichtung (22) ebenfalls den inneren Wärmetauscher (13) durchströmt, bevor es aus dem Bypass-Zweig (B) austritt.

9. Verfahren zum Betreiben eines Wärmemanagementkreislaufs (1) nach einem der Ansprüche 1 bis 6 nach einer zweiten Betriebsart, bei der das Kühlfluid nacheinander im zweiten Verdichter (7) und im zweiten Wärmetauscher (9) zirkuliert und bei dem am Ausgang des zweiten Wärmetauschers (9) das gesamte Kühlfluid in den Bypass-Zweig (B) strömt und die zweite Expansionsvorrichtung (22) durchströmt, wo es einen Druckverlust erfährt, wobei das Kühlfluid anschließend den ersten Wärmetauscher (5) durchströmt, bevor es zum zweiten Verdichter (7) gelangt.

10. Betriebsverfahren nach einem der Ansprüche 7 bis 9 **dadurch gekennzeichnet, dass** die Menge des den Bypass-Zweig durchströmenden Kühlfluids von der Öffnung der zweiten Expansionsvorrichtung (22), die durch die Zwischentemperatur des Kühlfluids am Ausgang des ersten Wärmetauschers (5) gesteuert wird, abhängt.

**Claims**

1. Thermal management circuit (1) for a motor vehicle, having a refrigerant-fluid loop (A) through which a refrigerant fluid flows, said refrigerant-fluid loop (A) having, in the direction of flow of the refrigerant fluid:

   - a first compressor (3),
   - a first heat exchanger (5) disposed downstream of the first compressor (3),
   - a second compressor (7),
   - a second heat exchanger (9) disposed downstream of the second compressor (7), said second heat exchanger (9) being intended to be passed through by a flow of air external to the motor vehicle,
   - a first expansion device (21) disposed downstream of the second heat exchanger (9),
   - a third heat exchanger (11) disposed downstream of the first expansion device (21), said third heat exchanger (11) being intended to be passed through by a flow of internal air intended for the motor vehicle interior,

   **characterized in that** said refrigerant-fluid loop (A) also has a bypass leg (B) connecting the refrigerant-fluid outlet of the second heat exchanger (9) to the refrigerant-fluid inlet of the first heat exchanger (5), said bypass leg (B) having a second expansion device (22) controlled by the measurement of an intermediate temperature of the refrigerant fluid leaving the first heat exchanger (5) .

2. Thermal management circuit (1) according to the preceding claim, **characterized in that** it has a device for redirecting the refrigerant fluid coming from the second heat exchanger (9) towards the first expansion device (21) and/or towards the second expansion device (22) of the bypass leg (B).

3. Thermal management circuit (1) according to either of the preceding claims, **characterized in that** it has a heat-transfer-fluid loop (C) having at least one charge-air cooler, and **in that** the first heat exchanger (5) is a two-fluid heat exchanger connected to said heat-transfer-fluid loop (C).

4. Thermal management circuit (1) according to one of Claims 1 to 3, **characterized in that** the first heat exchanger (5) is a charge-air cooler.

5. Indirect reversible thermal management circuit (1) according to one of the preceding claims, **characterized in that** the second expansion device (7) is a thermostatic expansion valve, the thermostatic bulb of which is disposed at the outlet of the first heat exchanger (5).

6. Thermal management circuit (1) according to one of the preceding claims, **characterized in that** it has an internal heat exchanger (13), said internal heat exchanger (13) allowing heat exchange between the refrigerant fluid upstream of the first expansion device (21) and the refrigerant fluid leaving of the second expansion device (22).

7. Method for operating a thermal management circuit (1) according to one of Claims 1 to 6, in a first operating mode in which the refrigerant fluid flows successively through the second compressor (7) and the second heat exchanger (9) and wherein, at the outlet of said second heat exchanger (9):

   - one portion of the refrigerant fluid passes through the first expansion device (21) where it undergoes a loss of pressure, passes through the third exchanger (11) and passes through the first compressor (3),
   - another portion of the refrigerant fluid passes into the bypass leg (B) and passes through the second expansion device (22) where it undergoes a loss of pressure,

   the refrigerant fluids coming from the first compressor (3) and the bypass leg (B) mixing upstream of the first heat exchanger (5) before passing through the latter and reaching the second compressor (7).

8. Operating method according to the preceding claim and in which the thermal management circuit is according to Claim 6, the refrigerant fluid upstream of the first expansion device (21) passing through the internal heat exchanger (13) before arriving at the third heat exchanger (11) and the refrigerant fluid leaving the second expansion device (22) likewise passing through the internal heat exchanger (13) before emerging from the bypass leg (B).

9. Method for operating a thermal management circuit (1) according to one of Claims 1 to 6, in a second operating mode in which the refrigerant fluid flows successively through the second compressor (7) and the second heat exchanger (9) and wherein, at the outlet of said second heat exchanger (9), all of the refrigerant fluid passes into the bypass leg (B) and passes through the second expansion device (22) where it undergoes a loss of pressure, and then the refrigerant fluid passes through the first heat exchanger (5) before reaching the second compressor (7).

10. Operating method according to one of Claims 7 to 9, **characterized in that** the amount of refrigerant fluid passing through the bypass leg depends on the opening of the second expansion device (22) controlled by the intermediate temperature of the refrigerant fluid leaving the first heat exchanger (5).

Fig. 1

Fig. 2

Fig. 3

Fig. 4

Fig. 5a

Fig. 5b

Fig. 5c

Fig. 5d

Fig. 6a

Fig. 6b

Fig. 6c

Fig. 6d

Fig. 7a

Fig. 7b

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014047401 A